# EUROPÄISCHE PATENTSCHRIFT

(11) **EP 0 723 755 B1**
(45) Veröffentlichungstag und Bekanntmachung des Hinweises auf die Patenterteilung: **08.04.1998**
(21) Anmeldenummer: 96100616.0
(22) Anmeldetag: 17.01.1996
(51) Int. Cl.: A47J 31/44, A47J 31/00, H05B 3/82

(54) **Heizeinrichtung für Flüssigkeiten**
Heater for liquids
Cuve de chauffage liquides

(30) Priorität: 28.01.1995 CH 217/95
(43) Veröffentlichungstag der Anmeldung: 31.07.1996
(73) Patentinhaber: Geissbühler, Hans, 9524 Zuzwil SG (CH)
(72) Erfinder: Geissbühler, Hans, 9524 Zuzwil SG (CH)
(74) Vertreter: Frommhold, Joachim, Dr.

(56) Entgegenhaltungen:
- EP-A- 0 279 782
- CH-A- 339 299
- US-A- 2 240 953
- US-A- 3 079 485
- US-A- 4 546 237
- US-A- 5 274 736

## Beschreibung

Die Erfindung betrifft eine Heizeinrichtung für Flüssigkeiten gemäss dem Oberbegriff des Anspruchs 1, insbesondere zur Zubereitung kleiner Mengen an Heissgetränken.

Kleine Mengen an warmen oder heissen Flüssigkeiten, insbesondere für Getränke werden oft noch mit elektrischen Tauchsiedern zubereitet. Diese bergen jedoch in ihrer Anwendung Gefahrenquellen in sich bzgl. Überhitzung und offener Heizflächen. Zudem weisen kleine Tauchsieder eine ungenüngende Leistung auf, leistungsstarke Geräte sind in ihrer Handhabung für kleine Gefässe kaum geeignet. In ebenfalls bekannten Kochpfannen mit eingebauter Heizung wird im Normalfall entweder zuviel oder zuwenig Flüssigkeit erhitzt, wobei immer eine relativ grosse Topfmasse erwärmt werden muss

Im weiteren sind auch Heizgeräte für Motorfahrzeuge oder auch Durchlauferhitzer für Kaffeemaschinen bekannt. Letztere, siehe z.B. CH 339 299, weisen aber für einfache Zwecke überflüssige Funktionen auf, und die Flüssigkeit, hier Wasser, ist durch lange Standzeiten im Regelfall nicht mehr frisch. Eine Reinigung oder Entkalkung ist aufwendig.

Die Entgegenhaltung US-PS 4,546,237 offenbart eine Heizeinrichtung für in Einzelgefässen (Tassen) befindliche Flüssigkeiten gemäß dem Oberbegriff des Anspruchs 1. Sie enthält eine Grundplatte, die mit einer Führungseinrichtung für die Heizeinrichtung selbst fest verbunden ist. Diese Einrichtung ist in ihrem Aufbau vergleichsweise kompliziert und es besteht eine potentielle Verletzungsgefahr bei Aufheizen des Mantels und dem Durchtritt heisser, feuchter Dämpfe durch Öffnungen, wenn die Heizeinrichtung nach dem Erwärmen der Flüssigkeit weiter nach oben geschoben wird.

Ein Thermostat zwischen den Heizstäben ist ungünstig bezüglich Hygiene und Sanitation.

Ein Abstandhalter isoliert den Thermostaten thermisch von der Heizung. Das bedeutet aber bei einer leistungsstarken Heizung, dass der Thermostat bei Fehlen von Flüssigkeit nicht oder zu spät reagiert und der Heizstab wegen Überhitzung beschädigt wird.

Ein in CH 471 519 geoffenbarter elektrischer Kocher weist einen, oben geschlossenen konischen Behälter mit einem anschraubbaren Boden auf, wobei in den, aus Boden und Behälter gebildetem Hohlraum ein Gefäss mit Flüssigkeiten eingebracht werden kann, in das ein Tauchsieder hineinragt. Die Handhabung des Behälters bei gefülltem Flüssigkeitsgefäss erfordert eine hohe Sorgfalt.

Der Erfindung liegt daher die Aufgabe zugrunde, eine Heizeinrichtung für Flüssigkeiten zu entwickeln, die eine Erhitzung kleiner Flüssigkeitsmengen mit hoher Sicherheit und geringen Leistungsverlusten in kurzer Zeit ermöglicht.

Erfindungsgemäss erfolgt die Lösung der Aufgabe durch die kennzeichnenden Merkmale des Anspruchs 1, vorteilhafte Ausgestaltungen sind in den Unteransprüchen dargelegt. Die Erfindung gestattet es, kleine Flüssigkeitsmengen, z.B. Wasser für eine Tasse Tee an beliebigen Orten ohne Überhitzungsgefahr und mit nur geringen Wasser-und Energieverlusten aufzuwärmen. Durch den Einsatz einer starken Wärmequelle und einer Steuer- oder Regeleinheit ist es möglich, z.B. 0,2l Wasser in ca. 40s auf Kochtemperatur zu erhitzen. Infolge der geringen zu erwärmenden Masse (Tasse und Heizgerät ist der Energiebedarf gering. Eine mögliche Regelung hat den Vorteil, dass bei Temperaturen nahe dem Siedepunkt durch reduzierte Leistung eine örtliche Überhitzung und somit unzulässige Verdampfung vermieden werden kann, die Verdampfungsverluste somit gering sind. Die Heizung kann mit einem Zeitschalter gesteuert oder mit einem Temperaturfühler mit Voll- und Teillasten geregelt werden.

Es wird eine gute Hygiene und Reinigung des Temperaturfühlers erreicht. Die Gefahr der Beschädigung ist hingegen gering.

Die Erfindung wird nachfolgend an einem Ausführungsbeispiel anhand einer Zeichnung näher beschrieben. In der Zeichnung zeigen
- Fig. 1: die erfindungsgemässe Heizeinrichtung in einem Schnittbild (mit Steuerung und Halterung)
- Fig. 1a: ein Schutzrohr mit Thermobimetall-Temperaturfühler
- Fig. 2: einen Schieberverschluss zum Abdecken einer Öffnung für einen Tassengriff
- Fig. 3: eine erfindungsgemässe Heizeinrichtung mit einer Regelung
- Fig. 3a: ein Schutzrohr mit elektronischem Widerstands-Temperaturfühler
- Fig. 4: ein Diagramm einer Regelung mit Sprungverhalten
- Fig. 5: ein Diagramm einer stetigen Regelung.

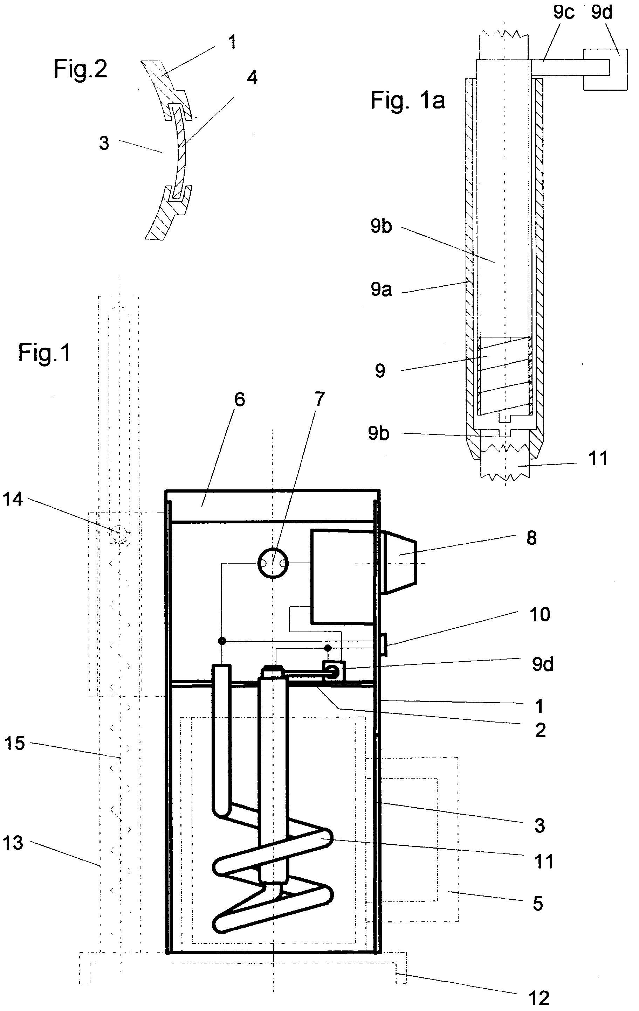

Eine in Fig. 1 dargestellte Heizeinrichtung für Flüssigkeiten besteht aus einem, an der unteren Stirnseite offenen Gehäuse 1 mit einer Zwischenwand 2 und einem Deckel 6, der das Gehäuse 1 nach oben hin abschliesst. In der Wandung des Gehäuses 1 befindet sich eine Öffnung 3 für einen Griff 5 einer Tasse, die z. B. mit Wasser gefüllt sein kann. In der Zwischenwand 2 ist senkrecht eine Heizspirale 11 fest angeordnet. Die Heizspirale 11 wird vorteilhaft gegen Überhitzung durch falsche Bedienung (z. B. heizen ohne Flüssigkeit) mit einem Temperaturfühler 9 in Form eines gewundenen Thermobimetalls abgesichert. Die Drehbewegung des Thermobimetalls wird in einem feststehenden Schutzrohr 9a mit Kupplungen 9b einerseits am Schutzrohr 9a und andererseits am Schalthebel 9c gekoppelt. Bei Überhitzung wird durch die Drehbewegung von Schalthebel 9c und einem Endschalter 9d der Kontakt unterbrochen und bei Abkühlung wieder hergestellt. Anstelle des Thermobimetalls kann sinngemäss ein Kontakt auch über eine Temperaturmessflüssigkeit durch Ausdehnung betätigt werden.
Die Stromzufuhr zur Heizspirale 11 erfolgt über einen Anschluss 7. Über einen Zeitschalter 8 kann die Heizdauer eingestellt werden, wobei mit einer Anzeige 10 Betriebszustände wie z. B. eine Überhitzung angezeigt werden können.
Zwecks Erhitzung einer Flüssigkeit in der Tasse wird einfach das Gehäuse 1 über die Tasse gestellt und die Heizeinrichtung in Betrieb gesetzt. Es besteht dabei auch keine Notwendigkeit, nach der Heizphase die heisse Tasse in Handhabung der Heizeinrichtung zu berühren. Ein Verschütten heisser Flüssigkeit oder dergleichen ist daher ausgeschlossen, so dass eine gefahrlose Benutzung gegeben ist. Es ist lediglich eine geeignete Unterlage vorzusehen.
Der Einbau einer Überhitzungssicherung in der Heizspirale 11 ist unwirtschaftlich, da eine Unterbrechung durch Überhitzung oder Alterung im Normalfall zu einem irreparablen Ausfall der Heizeinrichtung führt.
Die Heizeinrichtung kann durch eine Grundplatte 12 mit einem senkrecht stehenden Führungselement 13 mit Verdrehsicherung 14 und einem Kraftspeicherelement 15 zur Gewichtskompensation weiter ausgebaut werden. Das Gehäuse 1 ist hierbei so befestigt, dass es heb- und senkbar ist, um z. B. eine Tasse zu handhaben. Auf der Grundplatte 12 können auch Kondensattröpfchen aufgefangen werden.

Fig. 2 zeigt einen Verschluss der Öffnung 3 mit einem Schwerkraftschieber 4, wodurch Verstaubungen der Heizspirale 11 bzw. des Gehäuseraumes bei längerem Nichtgebrauch vermieden werden.

Das Gehäuse 1 kann sowohl aus Metall oder Kunststoff bestehen. Prinzipiell kann die Heizeinrichtung mit allen üblichen Nieder- und Netzspannungen betrieben werden, ggf. auch unter Einbau eines Transformators oder eines Schaltznetzteiles.

Durch die Anordnung des Temperaturfühlers 18 im Schutzrohr 9a wird eine vorteilhafte Hygiene und Reinigbarkeit desselben erreicht, verbunden mit geringer Störanfälligkeit (hohe Lebensdauer).

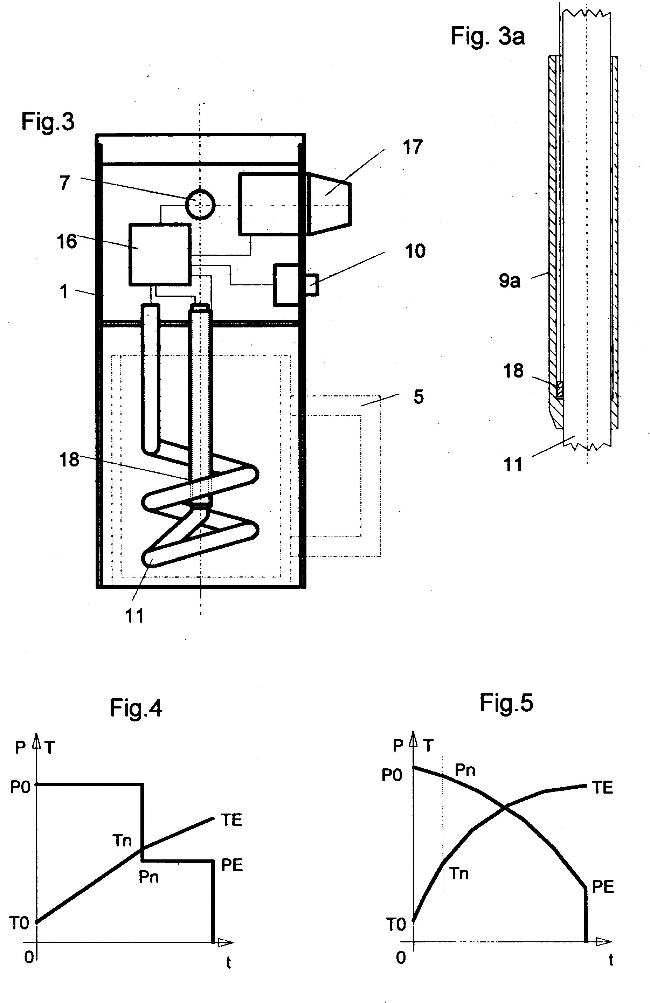

Eine komfortablere Ausgestaltung der erfindungsgemässen Heizeinrichtung mit einer elektronischen Regelung zeigt Fig. 3. Der Grundaufbau des Gehäuses 1 ist unverändert, jedoch wird der Temperaturfühler 18 im Schutzrohr 9a zur Ansteuerung einer Elektronikeinheit 16 verwendet, die die jeweils richtige Heizleistung zur Verfügung stellt.

Fig. 4 zeigt hierbei den Temperatur- und Leistungsverlauf in Funktion der Zeit eines Reglers mit Sprungverhalten, der bei Erreichen einer mittels der Elektronikeinheit 16 vorgegebenen Temperatur Tn im Vergleich zur gemessenen Temperatur T die Anfangsheizleistung Po sprunghaft auf die Momentanleistung Pn reduziert, damit an der Heizspirale 11 nur wenig Flüssigkeit infolge Überhitzung verdampfen kann. Es kann somit in mehreren Stufen und nahe an den Siedepunkt mit wenig Verdampfung gefahren werden. TE und PE stellen die Endwerte dar.

Fig. 5 zeigt einen Stetigregler, wobei mit steigender Temperatur Tn stetig die Heizleistung auf Pn reduziert wird. Mit der Verstellung 17 kann die Endtemperatur eingestellt werden.
Der Anschluss 7, der Zeitschalter 8 bzw. die Verstellung 17 und die Anzeige 10 können auch im Deckel 6 der Heizeinrichtung angeordnet sein.

Eine notwendiges Reinigen bzw. Entkalken der Heizeinrichtung erfolgt mittels einer Tasse Wasser mit etwas Essig in üblicher Weise.

### Verzeichnis der Bezugszeichen

- 1: Gehäuse
- 2: Zwischenwand
- 3: Öffnung
- 4: Schwerkraftschieber
- 5: Griff
- 6: Deckel
- 7: Anschluss
- 8: Zeitschalter
- 9: Temperaturfühler
- 9a: Schutzrohr
- 9b: Kupplung
- 9c: Schalthebel
- 9d: Endschalter
- 10: Anzeige
- 11: Heizspirale
- 12: Grundplatte
- 13: Führungselement
- 14: Verdrehsicherung
- 15: Kraftspeicherelement
- 16: Elektronikeinheit
- 17: Verstellung
- 18: Temperaturfühler

## Patentansprüche

1. Heizeinrichtung für Flüssigkeiten, insbesondere zur Erhitzung geringer Flüssigkeitsmengen an beliebigen Orten, mit einem, an der unteren Stirnseite offenen und mit einem Deckel an der oberen Stirnseite abgeschlossenen Gehäuse (1), welches eine innere Zwischenwand (2) zur Aufnahme einer Heizspirale (11) und eines Temperaturfühlers (9, 18) aufweist, wobei am Gehäuse (1) ein Anschluss (7) und in der Wandung des Gehäuses (1) eine Öffnung (3) für den Griff eines Flüssigkeitsbehälters vorgesehen ist,
dadurch gekennzeichnet, dass der Temperaturfühler (18) in einem Schutzrohr (9a) als Teil der Heizspirale (11) angeordnet ist, und dass weiterhin im oberen Teil des Gehäuses (1) ein Zeitschalter (8) bzw. eine Verstellung (17), ein Anschluß (7) und eine Anzeige (10) angeordnet sind.

2. Heizeinrichtung nach Anspruch 1, dadurch gekennzeichnet, dass die Öffnung (3) mit einem Schwerkraftschieber (4) verschliessbar ist.

3. Heizeinrichtung nach Anspruch 1 und 2, dadurch gekennzeichnet, dass das Gehäuse (1) an einem Führungselement (13) vertikal verschiebbar befestigt ist, wobei das Führungselement (13) selbst mit einer Grundplatte (12) fest verbunden ist.

4. Heizeinrichtung nach den Ansprüchen 1 und 2, dadurch gekennzeichnet, dass die Heizung mit einem Zeitschalter (8) steuerbar ist.

5. Heizeinrichtung nach den Ansprüchen 1 bis 3, dadurch gekennzeichnet, dass die Heizung mit einer Elektronikeinheit (16) und der Verstellung (17) regelbar ist.

6. Heizeinrichtung nach Anspruch 1, dadurch gekennzeichnet, dass der Temperaturfühler (9) in Form eines Thermobimetalls ausgebildet ist.

7. Heizeinrichtung nach Anspruch 1, dadurch gekennzeichnet, dass der Temperaturfühler (18) in Form eines elektronischen Widerstandselementes ausgebildet ist.

8. Heizeinrichtung nach Anspruch 1,
dadurch gekennzeichnet, dass der Temperaturfühler (9) in Form einer Temperaturmessflüssigkeit ausgebildet ist.

## Claims

1. Heating device for liquids, in particular for heating small quantities of liquid at any place, comprising an enclosure (1) having an open lower front face and an upper front face closed by means of a lid, said enclosure having an inner intermediate wall (2) for receiving a heating spiral (11) and a temperature detector (9,18), a connection (7) being provided on the enclosure (1) and an opening (3) for a handle for a liquid container being provided in the wall of the enclosure (1), characterized in that the temperature detector (18) is arranged in a protective tube (9a) as a part of the heating spiral (11) and that further, in the upper portion of the enclosure (1), there are provided a timing switch (8) and an adjustment means (17), respectively, a connection (7) and a display (10).

2. Heating device according to claim 1, characterized in that the opening (3) may be closed by means of a gravity slide (4).

3. Heating device according to claims 1 and 2, characterized in that the enclosure (1) is vertically movably attached to a guiding element (13), said guiding element (13) itself being rigidly attached to a base plate (12).

4. Heating device according to claims 1 and 2, characterized in that the heating is controllable by means of a timing switch.

5. Heating device according to the claims 1 to 3, characterizing in that the heating is controllable by means for an electronic unit (16) and the adjustment means (17).

6. Heating device according to claim 1, characterized in that the temperature detector (9) is provided as a thermo bimetal.

7. Heating device according to claim 1, characterized in that the temperature detector (18) is in the form of an electronic resistive element.

8. Heating device according to claim 1, characterized in that the temperature detector (9) is conceived as a temperature measuring fluid.

## Revendications

1. Dispositif de chauffage pour liquides, en particulier pour chauffer de petites quantités de liquides en des endroits quelconques, comprenant un récipient (1) ouvert sur le côté frontal inférieur et fermé à l'aide d'un couvercle sur le côté frontal supérieur, ledit récipient ayant une paroi intermédiaire (2) intérieure pour recevoir une spirale chauffante (11) et un détecteur de température (9,18), un contact (7) étant prévu au récipient (1), ainsi qu'une ouverture (3) pour un manche de récipient de liquide dans la paroi du récipient (1), caractérisé en ce que le détecteur de température (18) est disposé dans un tuyau de protection (9a) comme partie de la spirale chauffante (11) et qu'en outre sont prévus, dans la partie supérieure du récipient (1), sont prévus une minuterie (8), respectivement un moyen d'ajustage (17), un contact (7) et un dispositif d'affichage (10).

2. Dispositif de chauffage selon la revendication 1, caractérisé en ce que l'ouverture (3) peut être fermée à l'aide d'un coulisseau de gravité (4).

3. Dispositif de chauffage selon la revendication 1 ou 2, caractérisé en ce que le récipient (1) est fixé à un élément de guidage (13) de façon à pouvoir être déplacé verticalement, l'élément de guidage (13) étant lui-même relié de façon fixe à une plaque de base.

4. Dispositif de chauffage selon les revendications 1 et 2, caractérisé en ce que le chauffage peut être commandé à l'aide d'une minuterie (8).

5. Dispositif de chauffage selon les revendications 1 à 3, caractérisé en ce que le chauffage peut être réglé à l'aide d'une unité électronique (16) et du moyen d'ajustement (17).

6. Dispositif de chauffage selon la revendication 1, caractérisé en ce que le détecteur de température (9) est conçu comme bimétal thermique.

7. Dispositif de chauffage selon la revendication 1, caractérisé en ce que le détecteur de température (18) est conçu sous forme d'un élément de résistance électronique.

8. Dispositif de chauffage selon la revendication 1, caractérisé en ce que le détecteur de température (9) est conçu sous forme d'un liquide de mesure de température.
